# FASCICULE DE BREVET EUROPEEN

(11) **EP 3 661 804 B1**
(45) Date de publication et mention de la délivrance du brevet: **09.03.2022**
(21) Numéro de dépôt: 18752817.9
(22) Date de dépôt: 09.07.2018
(51) Int. Cl.: B60N 2/22, B60N 2/36, B60N 2/60

(54) **DISPOSITIF DE PROTECTION D'UN OCCUPANT D'UN SIEGE DE VEHICULE VIS A VIS D'UN SYSTEME D'INCLINAISON DU DOSSIER D'UN TEL SIEGE ET PROCEDE DE FIXATION D'UN TEL DISPOSITIF**
VORRICHTUNG ZUM SCHUTZ EINES FAHREZUGSITZ-INSASSEN GEGENÜBER EINER LEHNEN-NEIGUNGSEINSTELLUNG EINES SOLCHEN SITZES UND VERFAHREN ZUM BEFESTIGEN EINER SOLCHEN VORRICHTUNG
PROTECTION DEVICE FOR AN OCCUPANT OF A VEHICLE SEAT WITH RESPECT TO A BACKREST INCLINATION ADJUSTING SYSTEM OF SUCH A SEAT AND PROCESS FOR ATTACHING SUCH A DEVICE

(30) Priorité: 01.08.2017 FR 1757378
(43) Date de publication de la demande: 10.06.2020
(73) Titulaire: PSA Automobiles SA, 78300 Poissy (FR)
(72) Inventeur: VOITOT, Jean, 25250 ONANS (FR); OUACHEE, Herve, 25250 APPENANS (FR); COMBEAU, Frederic, 25750 DESANDANS (FR)
(86) Numéro de dépôt international: PCT/FR2018/051718
(87) Numéro de publication internationale: WO 2019/025681

(56) Documents cités:
- WO-A1-2017/103365
- DE-B3-102006 056 599
- DE-U1- 9 014 879
- DE-U1- 29 713 709
- FR-A1- 3 028 464

## Description

L'invention concerne, de façon générale, les dispositifs de protection installés dans un habitacle de véhicule et destinés à protéger les occupants du véhicule d'éventuels risques de blessures. L'invention vise en particulier un dispositif de protection d'un occupant d'un siège inclinable vis-à-vis d'une gâche mobile intégrée au dossier d'un tel siège de véhicule automobile. De tels dispositifs sont connus de l'art antérieur, notamment dans les demandes de brevets FR 3 028 464 A1 et WO 2017 103 365 A1.

De manière connue, un véhicule automobile comprend deux sièges avant et une ou deux banquettes arrière permettant au conducteur de se positionner correctement à son poste de conduite et aux passagers d'être installés confortablement dans le véhicule.

En effet, dans l'état de la technique, un siège de véhicule comprend une armature composée de pièces généralement métalliques, définissant la structure rigide du siège et permettant sa liaison avec l'habitacle du véhicule. Des nappes de suspension, composées de fils d'acier à ressorts et fixées à l'armature du siège, permettent l'installation d'une garniture assurant la souplesse de l'assise et du dossier du siège. Une telle garniture, communément désignée « matelassure », est généralement recouverte d'une coiffe, composée de fibres de tissu formant le revêtement du siège.

Selon l'état de l'art, un siège arrière de véhicule, communément désigné banquette arrière, comprend une première partie sensiblement horizontale, correspondant à l'assise du siège, et une seconde partie, correspondant au dossier, sur lequel repose le dos d'un occupant. Un dossier de banquette arrière est généralement configuré pour pivoter de manière à permettre son inclinaison par rapport à l'assise. Une telle inclinaison permettant de rabattre le dossier sur l'assise du siège, offre un espace de rangement modulable dans le coffre du véhicule.

De même, il est connu un système d'inclinaison permettant de verrouiller le dossier d'une banquette arrière dans différentes positions, c'est-à-dire selon différents angles d'inclinaison entre l'assise et le dossier de la banquette. Un tel système d'inclinaison permet à un passager de s'installer sur la banquette arrière tout en optimisant l'espace de rangement dans le coffre. Pour cela, un tel système d'inclinaison comprend un verrou, fixé à l'armature du dossier du siège, et une gâche, correspondant à un fil métallique en forme de U, à l'intérieur duquel s'enclenche le verrou.

Une telle gâche, escamotable, est configurée pour coulisser à l'intérieur d'un boîtier, fixé à un élément de structure du véhicule. La gâche évolue ainsi entre une configuration rétractée et une configuration déployée, de manière à permettre l'écartement du dossier de la structure du véhicule. Lorsque la gâche est en position déployée, afin de limiter les risques de blessure des occupants, le système d'inclinaison comprend un soufflet souple, configuré pour recouvrir la gâche. Un élément de fermeture du soufflet prenant appui sur une extrémité transversale de la gâche, permet l'allongement du soufflet lorsque ladite gâche est placée dans la configuration déployée.

Cependant, un tel élément de fermeture d'un tel soufflet de protection présente l'inconvénient d'être une pièce supplémentaire rapportée et fixée au soufflet par collage ou sertissage par exemple. Une telle liaison entre le soufflet de protection et l'élément de fermeture est régulièrement sollicitée du fait du mouvement de la gâche, ce qui peut la fragiliser. De plus la seconde extrémité du soufflet n'est pas fixée de manière optimale à la structure du véhicule, ce qui présente un autre inconvénient.

L'invention vise donc à pallier au moins en partie ces inconvénients en proposant un dispositif de protection d'un occupant vis-à-vis d'une gâche mobile simple, efficace et peu onéreux permettant d'assurer la protection des passagers lorsqu'une telle gâche se trouve dans une position déployée. Le dispositif de protection selon l'invention permet également de limiter les efforts de liaison entre différentes pièces du dispositif de protection.

Plus précisément, pour parvenir à ce résultat, la présente invention concerne un dispositif de protection pour la protection d'un occupant d'un siège de véhicule, notamment de véhicule automobile, vis à vis d'un système d'inclinaison d'un dossier dudit siège, ledit véhicule comprenant un élément d'habillage, ledit système d'inclinaison comprenant une gâche configurée pour coulisser par rapport audit élément d'habillage, ledit dispositif de protection, configuré pour évoluer entre une configuration rétractée et une configuration déployée, comprenant :
- un soufflet, configuré pour recouvrir ladite gâche, ledit soufflet comprenant une première extrémité et une deuxième extrémité,
- des moyens d'ancrage configurés pour permettre la fixation dudit soufflet audit élément d'habillage du véhicule, ladite première extrémité du soufflet intégrant intégralement lesdits moyens d'ancrage, et
- des moyens de fixation configurés pour permettre la fixation du soufflet à ladite gâche, ladite deuxième extrémité dudit soufflet intégrant intégralement lesdits moyens de fixation.

Un tel dispositif de protection permet de limiter les risques de blessures des occupants du véhicule qui risqueraient par exemple de se coincer les doigts dans la gâche du système d'inclinaison.

L'élément d'habillage du véhicule comprenant une pluralité d'encoches, les moyens d'ancrage comprennent une pluralité de pattes de fixation, configurées pour s'insérer dans lesdites encoches de l'élément d'habillage, permettant d'assurer la fixation directe du dispositif de protection à l'élément d'habillage, permettant de limiter la visibilité du système d'inclinaison.

Ladite gâche comprenant un fil de gâche comprenant un corps principal, lesdits moyens de fixation comprennent une languette de fixation, configurée pour se rabattre derrière ledit corps principal dudit fil de gâche du dispositif de protection, permettant de fixer le dispositif de protection au système d'inclinaison.

Avantageusement, la deuxième extrémité comprenant les moyens de fixation et deux orifices, configurés pour permettre le passage de la gâche, ladite gâche comprenant un fil de gâche recourbé présentant un diamètre prédéterminé, lesdits deux orifices présentent un diamètre supérieur audit diamètre prédéterminé dudit fil de gâche, permettant un coulissement optimal du fil de gâche dans les orifices du dispositif de protection.

De manière préférée, le soufflet présente une section décroissante entre la première extrémité et la deuxième extrémité, permettant au dispositif de protection de suivre le profil de la gâche.

De manière avantageuse, le dispositif de protection est fabriqué dans un matériau déformable, par exemple un matériau thermoplastique comprenant du polypropylène et de l'éthylène-propylène-diène monomère (EPDM) non chargé et non revêtu, comme du caoutchouc par exemple, lui conférant des propriétés élastiques.

Avantageusement, la première extrémité comprenant une surface d'interface faisant saillie dudit soufflet, ladite surface d'interface présente une épaisseur supérieure ou égale à 3 mm, permettant une meilleure fixation audit élément d'habillage du véhicule.

L'invention concerne également un ensemble d'un système d'inclinaison d'un dossier d'un siège de véhicule, notamment de véhicule automobile, et d'un dispositif de protection tel que décrit précédemment, ledit véhicule comprenant un élément d'habillage, ledit système d'inclinaison comprenant une gâche configurée pour coulisser par rapport audit élément d'habillage du véhicule, ledit dispositif de protection étant configuré pour protéger un occupant dudit siège vis-à-vis du système d'inclinaison.

L'invention concerne en outre un véhicule automobile comprenant un siège comprenant un dossier et un ensemble d'un système d'inclinaison d'un tel dossier tel que décrit précédemment.

L'invention porte enfin sur un procédé de fixation d'un dispositif de protection d'un occupant d'un siège de véhicule, notamment de véhicule automobile, vis-à-vis d'un système d'inclinaison d'un dossier dudit siège, le dispositif de protection étant tel que décrit précédemment, ledit véhicule comprenant un élément d'habillage, ledit système d'inclinaison comprenant une gâche configurée pour coulisser par rapport audit élément d'habillage du véhicule, ladite gâche comprenant un fil de gâche comportant un corps principal, ledit procédé comprenant :
- une étape d'insertion d'un soufflet autour de ladite gâche dudit système d'inclinaison,
- une étape d'écartement de moyens de fixation, de manière à permettre le passage dudit corps principal dudit fil de gâche de la gâche,
- une étape de rabattement desdits moyens de fixation derrière le corps principal du fil de gâche de la gâche, et
- une étape de clippage de moyens d'ancrage audit élément d'habillage du véhicule.

D'autres caractéristiques et avantages de l'invention apparaîtront à la lecture de la description détaillée des formes de réalisation de l'invention, données à titre d'exemple uniquement, et en référence aux dessins qui montrent :
- la figure 1, une représentation schématique d'un véhicule automobile et du repère de définition d'un tel véhicule,
- la figure 2, une représentation schématique d'un système d'inclinaison sur lequel se fixe un dispositif de protection selon l'invention,
- la figure 3, une vue des détails de l'intérieure d'un système d'inclinaison de la figure 2,
- les figures 4A et 4B, une représentation schématique d'un système d'inclinaison de la figure 2 respectivement dans une configuration déployée et dans une configuration rétractée,
- la figure 5, une représentation schématique d'un dispositif de protection selon une forme de réalisation préférée de l'invention,
- les figures 6A à 6C, respectivement une vue de profil, une vue de derrière et une vue de face du dispositif de protection de la figure 5, et
- la figure 7, un schéma bloc d'un procédé de fixation du système de protection selon un mode de réalisation préféré de l'invention.

Dans ce qui va suivre, les formes de réalisation décrites s'attachent plus particulièrement à une installation du dispositif de protection selon l'invention et du système d'inclinaison d'un siège au sein d'un véhicule automobile. Cependant, toute installation dans un contexte différent, en particulier dans tout type de véhicule, est également visée par la présente invention.

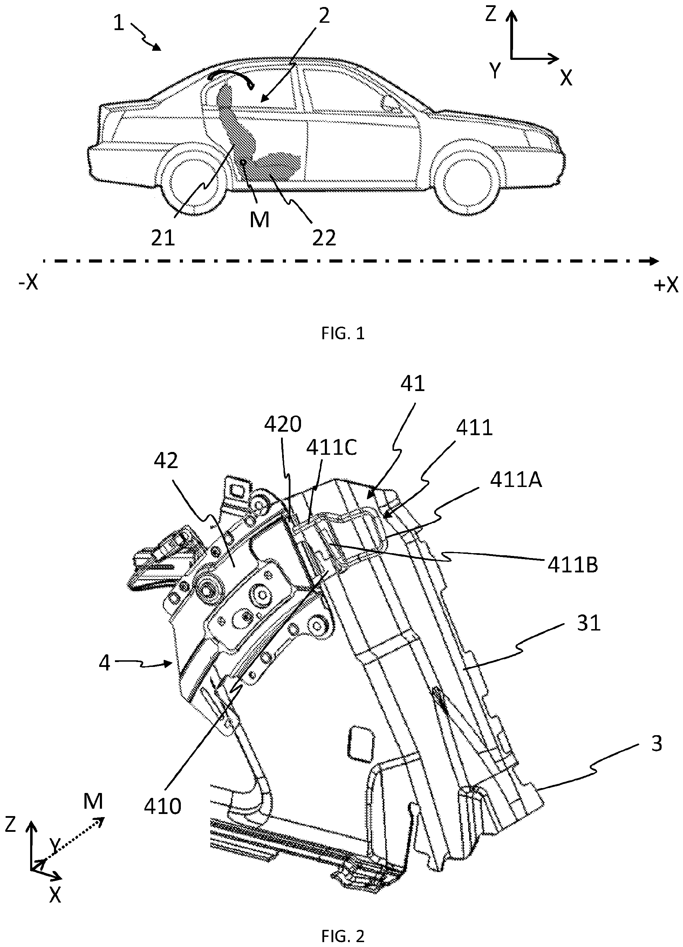

Selon une forme de réalisation préférée de l'invention, un véhicule 1 automobile comprend un siège 2 arrière, de type banquette. En référence à la figure 1, un tel siège 2 comprend un dossier 21, sur lequel repose le dos d'un occupant, et une assise 22, sur laquelle l'occupant est assis. Le véhicule 1 automobile s'étend longitudinalement selon un axe X, latéralement selon un axe Y et verticalement selon un axe Z, de manière à former un repère orthogonal (X, Y, Z). Ainsi le terme « transversal » décrit un objet s'étendant dans le plan (Y, Z). De plus, l'avant du véhicule 1 et du siège 2 est défini en référence à la direction +X de l'axe longitudinal du véhicule et l'arrière à la direction -X.

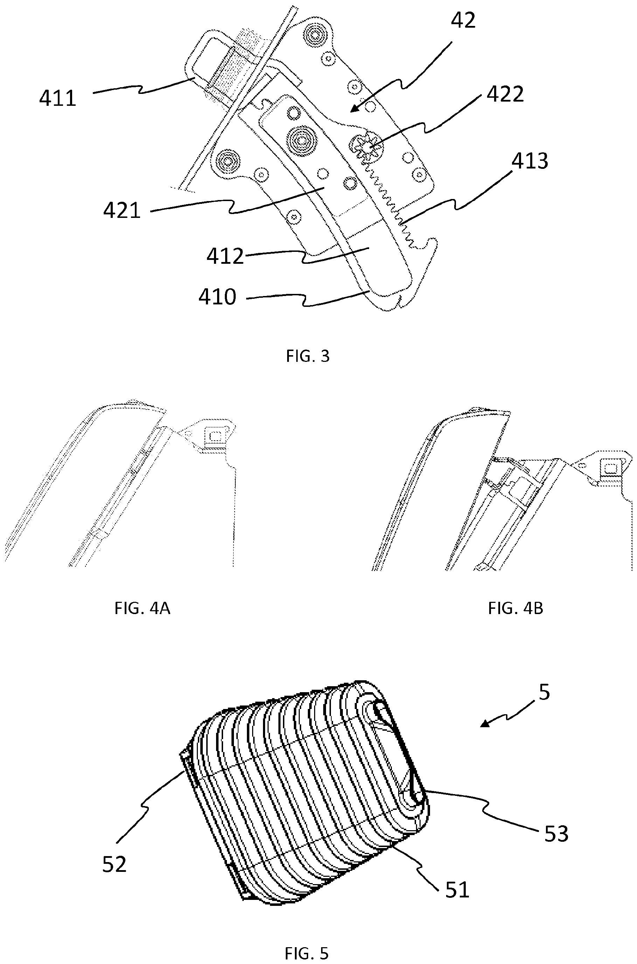

En, référence aux figures 2 et 3, le véhicule 1 comprend en outre un élément d'habillage 3 intérieur, par exemple permettant de délimiter l'intérieur du coffre du véhicule 1. Un tel élément d'habillage 3 comprend une pluralité d'encoches (non représentées) qui seront décrites plus en détails par la suite. Le véhicule 1 comprend en outre un système d'inclinaison 4 et de verrouillage du dossier 21 du siège 2. En effet, le dossier 21 du siège 2 arrière est monté pivotant par rapport à l'assise 22 selon un axe M transversal (également représenté sur la figure 1), c'est-à-dire selon un axe colinéaire à l'axe Y, de manière à pouvoir être rabattu vers l'avant, notamment pour offrir un espace de rangement supplémentaire dans le coffre.

Le dossier 21 est lié rigidement à l'élément d'habillage 3 du véhicule 1 grâce au système d'inclinaison 4 suivant une plage d'inclinaison réglable entre une première configuration d'inclinaison maximale vers l'arrière et une deuxième configuration d'inclinaison maximale vers l 'avant.

Un tel système d'inclinaison 4 multi-positions comporte classiquement un verrou (non représenté sur la figure 2) lié à l'armature ou à la garniture du dossier 21, ainsi qu'une gâche 41 partiellement logée dans un boîtier 42 support fixé à l'élément d'habillage 3. Un tel verrou, bien connu en soi, comporte classiquement un pêne rotatif en forme de fourche s'étendant sensiblement horizontalement à l'intérieur d'un corps délimitant un avaloir de réception pour la gâche 41.

Une telle gâche 41 comporte une platine 410 métallique prolongée à l'avant par un fil de gâche 411 métallique en U, saillant à l'avant du boîtier 42 au travers d'une ouverture 420 ménagée sur la face avant d'un tel boîtier 42. Un tel fil de gâche 411 est configuré pour venir en prise avec le pêne du verrou pour verrouiller le dossier 21 sur l'élément d'habillage 3.

Le fil de gâche 411 comprend un tube métallique présentant un diamètre prédéterminé, par exemple compris entre 7,9 et 8,1 mm, de préférence 8 mm. Le fil de gâche 411 comprend en outre une première extrémité libre 411B recourbée derrière un corps principal 411A, s'étendant vers l'avant, et une seconde extrémité 411C, s'étendant vers l'arrière et étant soudée sur la platine 410.

Lors de l'insertion du fil de gâche 411 dans l'avaloir de réception du verrou, le pêne est entrainé en rotation vers une position fermée dans laquelle il retient la base radiale d'un tel fil de gâche 44 et verrouille ainsi le dossier 21 sur l'élément d'habillage 3 du véhicule 1. Le déverrouillage du dossier 21 est réalisé via un mécanisme non représenté relié au verrou et actionnable par une commande située en partie supérieure du dossier 21, l'actionnement de ce mécanisme ayant pour effet de désengager le pêne du fil de la gâche 411.

La gâche 41 est montée coulissante dans le boîtier 42 support, selon une course en arc de cercle centrée sur l'axe de pivotement du dossier 21 et correspondant sensiblement à celle que parcourt le verrou lors de la modification de l'angle d'inclinaison du dossier 21, de sorte à demeurer en prise avec ce verrou durant le déplacement du dossier 21.

Pour ce faire, la platine 410 présente sur quasiment l'ensemble de sa longueur une lumière 412 oblongue en arc de cercle, centrée sur l'axe M de pivotement du dossier 21 et traversée par un organe de guidage 421 à coulissement solidaire du boîtier 42 support. Comme représenté sur la figure 3, un tel organe de guidage 421 est formé dans cet exemple par une plaque métallique nettement plus courte que la lumière 412 afin d'autoriser le coulissement de la gâche 41, et présentant une forme arquée complémentaire de celle de la lumière 412 de sorte à limiter les jeux.

La gâche 41 est ainsi apte, tout en demeurant en prise avec le verrou, à coulisser dans le boîtier 42 support entre une première position de butée correspondant à l'inclinaison maximale vers l'arrière du dossier 21 (figure 4A), et une seconde position de butée correspondant à l'inclinaison maximale vers l'avant de ce dossier 21 (figure 4B).

Le système d'inclinaison 4 comporte également des moyens motorisés de réglage (non représentés) et de verrouillage de la position de la gâche 41 par rapport au boîtier 42 support sur l'ensemble de sa course. De tels moyens comportent une crémaillère 413 s'étendant le long de la majeure partie du bord supérieur de la platine 410 entre deux butées d'extrémité, cette crémaillère 413 coopérant avec un pignon denté 422 logé dans le boîtier 42 et monté à rotation sur un axe transversal motorisé, parallèle à l'axe M de pivotement du dossier 21.

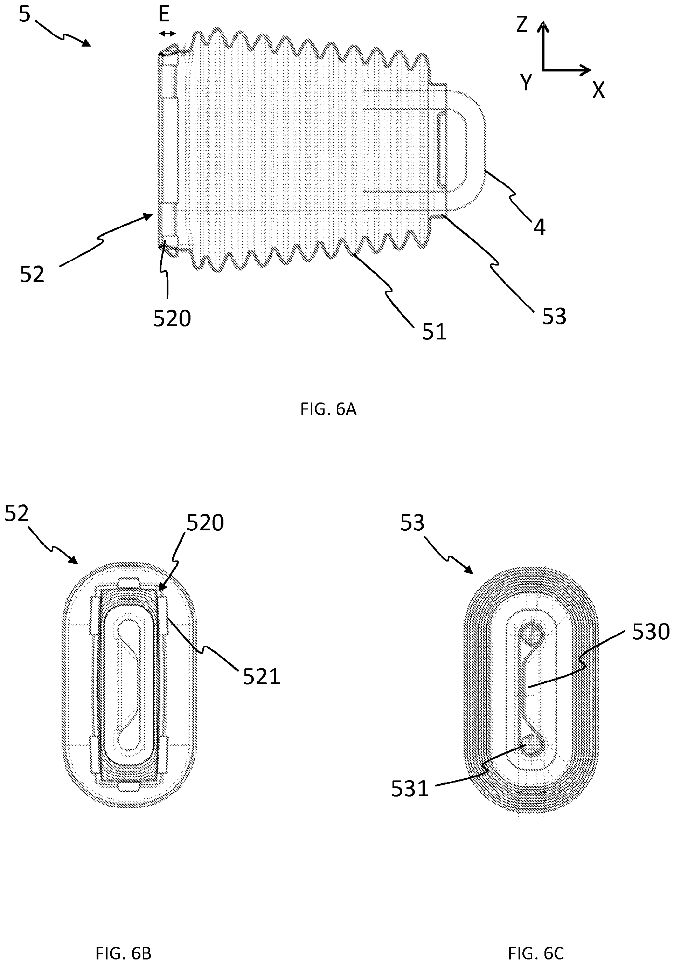

Selon une forme de réalisation de l'invention, en référence aux figures 5, 6A, 6B et 6C, le système d'inclinaison 4 comporte en outre un dispositif de protection 5 comportant un soufflet 51 souple comportant une première extrémité 52, configurée pour fixer ledit soufflet 51 à l'élément d'habillage 3 du véhicule 1, et une deuxième extrémité 53, configurée pour permettre la solidarisation du dispositif de protection 5 au système d'inclinaison 4.

Comme représenté sur la figure 6A, le soufflet 51 comprend une série de plis orientés sensiblement radialement et est configuré pour s'étendre à l'avant du boîtier 42 depuis le pourtour de l'ouverture 420 du boitier 42. Un tel soufflet 51 présente une section, de forme oblongue, décroissante depuis l'arrière vers l'avant, lorsque le dispositif de protection 5 est positionné autour de la gâche 41. Autrement dit la première extrémité 52 présente une surface plus importante que la surface de la deuxième extrémité 53.

Le soufflet 51 réalisé en matériau souple, par exemple dans un matériau élastomère de type caoutchouc, est ainsi extensible et déformable. Le soufflet 51 est alors configuré pour évoluer entre une configuration rétractée (lorsque le système d'inclinaison 4 se trouve dans sa première position de butée correspondant à l'inclinaison maximale vers l'arrière du dossier 21) et une configuration déployée (lorsque le système d'inclinaison 4 se trouve dans sa seconde position de butée correspondant à l'inclinaison maximale vers l'avant du dossier 21).

Les figures 6B et 6C représentent respectivement une vue arrière et une vue avant du dispositif de protection 5 lorsque celui-ci est positionné sur la gâche 41. Autrement dit les figures 6B et 6C présentent la première extrémité 52 et la deuxième extrémité 53 du dispositif de protection 5.

La première extrémité 52 présente une forme rectangulaire et comprend une surface d'interface 520 (représentée sur la figure 6A) faisant saillie dudit soufflet 51 et offrant une surface permettant le clippage du dispositif de protection 5. Une telle surface d'interface 520 est configurée pour s'insérer à l'intérieur d'une ouverture ménagée dans l'élément d'habillage 3 du véhicule 1. De manière préférée, la surface d'interface 520 présente une épaisseur E supérieure ou égale à 3 mm.

Afin de permettre le clippage du dispositif de protection 5 à l'élément d'habillage 3, la première extrémité 52 comprend des moyens d'ancrage. De tels moyens d'ancrage comprennent dans cet exemple une pluralité de pattes de fixation 521, par exemple 6 pattes de fixation 521, configurées pour s'insérer dans la pluralité d'encoches de l'élément d'habillage 3 du véhicule 1, définies précédemment. De tels moyens d'ancrage du dispositif de protection 5 dans l'élément d'habillage 3 permettent de dissimuler le boîtier 42 et donc le système d'inclinaison 4 à l'arrière de l'élément d'habillage 3.

La deuxième extrémité 53 est configurée pour s'étendre vers l'avant du système d'inclinaison 4 et permet à la fois le maintien en place du dispositif de protection 5 et son déploiement lorsque le système d'inclinaison 4 se trouve dans sa seconde position de butée correspondant à l'inclinaison maximale vers l'avant du dossier 21. Pour cela, la deuxième extrémité 53 comprend des moyens de fixation comprenant une languette de fixation 530 et deux orifices 531, configurés pour permettre le passage du corps principal 411A du fil de gâche 411.

La languette de fixation 530, en matériau souple identique au matériau du soufflet 51, est moulée directement avec le soufflet 51 lors de la fabrication du dispositif de protection 5, de manière à disposer d'un soufflet 51 et d'une languette de fixation 530 d'un seul tenant, c'est-à-dire d'un dispositif de protection 5 monobloc. Aussi aucune pièce supplémentaire n'est nécessaire, permettant de supprimer les efforts de liaison entre deux pièces distinctes.

La languette de fixation 530 souple est configurée pour s'écarter ou être déployée hors d'un plan de fermeture, dans lequel la languette de fixation 530 est au repos, de manière à permettre le passage du corps principal 411A du fil de gâche 411 et pour se replacer au repos une fois le corps principal 411A du fil de gâche 411 passé. Une telle languette de fixation 530 permet au dispositif de protection 5 de suivre l'évolution du système d'inclinaison 4 entre la première position de butée et la deuxième position de butée.

La deuxième extrémité 53 comprend en outre deux orifices 531, permettant le passage du fil de gâche 411 quel que soit l'état de la languette de fixation 530. Aussi lorsque la languette de fixation 530 est au repos à l'arrière du corps principal 411A du fil de gâche 411, les deux orifices 531 permettent audit fil de gâche 411 de coulisser lors de l'inclinaison du dossier 21 du siège 2 et donc de l'extension de la gâche 41. De manière préférée, le diamètre de chaque orifice 531 est supérieur au diamètre du fil de gâche 411, de préférence encore, supérieur au diamètre du fil de gâche 411 ajouté de 1.4 mm, de manière à permettre un coulissement optimal du fil de gâche 411 dans les orifices 531.

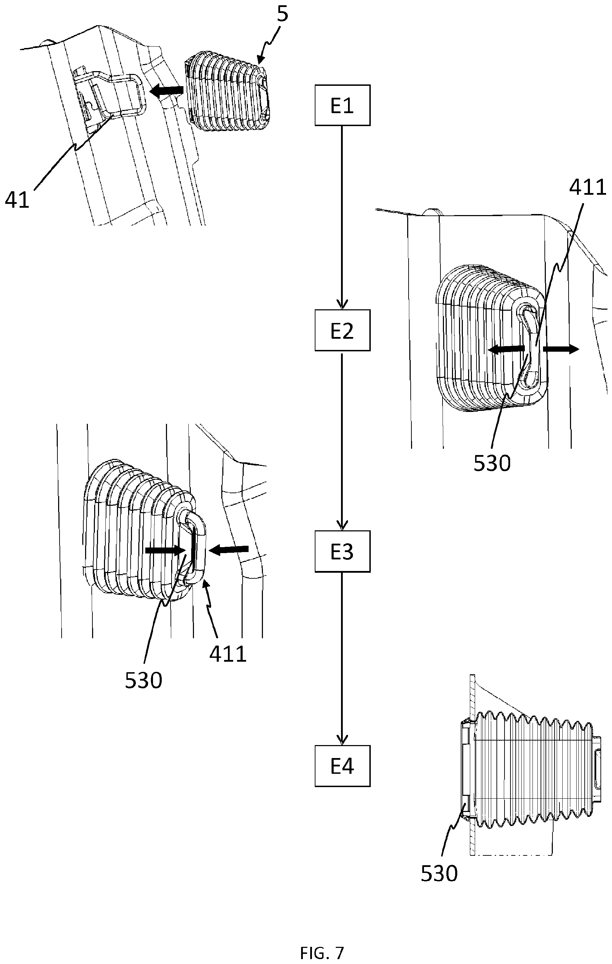

Il va dorénavant être décrit un procédé de fixation d'un dispositif de protection 5 sur un système d'inclinaison 4, en référence à la figure 7.

Selon un mode de réalisation préféré, le procédé comprend tout d'abord une étape E1 d'insertion d'un dispositif de protection 5 autour de la gâche 41 du système d'inclinaison 4. Le dispositif de protection 5 est chaussé autour de la gâche 41 jusqu'à entrer en butée avec l'élément d'habillage 3 du véhicule 1.

La languette de fixation 530 est ensuite écartée dans une étape E2, de manière à permettre le passage du corps principal 411A du fil de gâche 411. Autrement dit, les moyens de fixation de la deuxième extrémité 53 sont déformés manuellement, de manière à les écarter dans le but de ménager une ouverture dans laquelle le corps principal 411A du fil de gâche 411 est inséré. De manière alternative, la languette de fixation 530 pourrait également être relevée, de manière à être placée perpendiculairement au plan formé par la surface de la deuxième extrémité 53.

Après le passage du corps principal 411A du fil de gâche 411, la languette de fixation 530 est relâchée et rabattue derrière le fil de gâche 411 dans une étape E3. Un tel repli de la languette de fixation 530 se produit automatiquement du fait du matériau souple de type caoutchouc.

Enfin, les pattes de fixation 521 des moyens d'ancrage de la première extrémité 52 sont insérées, dans une étape E4, dans les encoches de l'élément d'habillage 3, de manière à permettre la solidarisation du dispositif de protection 5 avec l'élément d'habillage 3 du véhicule 1 en les clippant.

Les pattes de fixation 521 clippées dans l'élément d'habillage 3, la languette de fixation 530 ainsi rabattue permet à la fois de maintenir le dispositif de protection 5 en place et d'entrainer le dispositif de protection 5 au cours de l'évolution de la position du dossier 21 du siège 2 incliné. Le dispositif de protection 5 permet ainsi d'assurer une protection efficace des occupants du véhicule 1, tout en étant solide, du fait de l'utilisation d'un dispositif de protection 5 monobloc, ne nécessitant pas de pièces supplémentaires. Un tel dispositif de protection 5 monobloc permet également d'assurer un montage rapide sur un système d'inclinaison d'un dossier de siège d'un véhicule 1.

## Revendications

1. Dispositif de protection (5) pour la protection d'un occupant d'un siège (2) de véhicule (1), notamment de véhicule (1) automobile, vis à vis d'un système d'inclinaison (4) d'un dossier (21) dudit siège (2), ledit véhicule (1) comprenant un élément d'habillage (3) comportant une pluralité d'encoches, ledit système d'inclinaison (4) comprenant une gâche (41) configurée pour coulisser par rapport audit élément d'habillage (3) et comprenant un fil de gâche (411) comprenant un corps principal (411A), ledit dispositif de protection (5), configuré pour évoluer entre une configuration rétractée et une configuration déployée, comprenant :
- un soufflet (51), configuré pour recouvrir ladite gâche (41), ledit soufflet (51) comprenant une première extrémité (52) et une deuxième extrémité (53),
**caractérisé en ce que** le dispositif comprend
- des moyens d'ancrage configurés pour permettre la fixation dudit soufflet (51) audit élément d'habillage (3) du véhicule (1), ladite première extrémité (52) du soufflet (51) intégrant intégralement lesdits moyens d'ancrage, ledits moyens d'ancrage comprennent une pluralité de pattes de fixation (521) configurées pour s'insérer dans les encoches de l'élément d'habillage (3),
- et des moyens de fixation comprennent une languette de fixation (530) configurée pour se rabattre derrière ledit corps principal (411A) dudit fil de gâche (411) et permettre la fixation du soufflet (51) à ladite gâche (41), ladite deuxième extrémité (53) dudit soufflet (51) intégrant intégralement lesdits moyens de fixation.

2. Dispositif de protection (5) selon l'une des revendications précédentes, dans lequel la deuxième extrémité (53) comprenant les moyens de fixation et deux orifices (531), configurés pour permettre le passage de la gâche (41), ladite gâche (41) comprenant un fil de gâche (411) recourbé présentant un diamètre prédéterminé, lesdits deux orifices (531) présentent un diamètre supérieur audit diamètre prédéterminé dudit fil de gâche (411).

3. Dispositif de protection (5) selon l'une des revendications précédentes, dans lequel le soufflet (51) présente une section décroissante entre la première extrémité (52) et la deuxième extrémité (53).

4. Dispositif de protection (5) selon l'une des revendications précédentes, fabriqué dans un matériau déformable, de préférence un matériau thermoplastique comprenant du polypropylène et de éthylène-propylène-diène monomère non chargé et non revêtu.

5. Dispositif de protection (5) selon l'une des revendications précédentes, dans lequel la première extrémité (52) comprenant une surface d'interface (520) faisant saillie dudit soufflet (51), ladite surface d'interface (520) présente une épaisseur (E) supérieure ou égale à 3 mm.

6. Ensemble d'un système d'inclinaison (4) d'un dossier (21) d'un siège (2) de véhicule (1), notamment de véhicule (1) automobile, et d'un dispositif de protection (5) selon l'une des revendications 1 à 5, ledit véhicule (1) comprenant un élément d'habillage (3), ledit système d'inclinaison (4) comprenant une gâche (41) configurée pour coulisser par rapport audit élément d'habillage (3) du véhicule (1), ledit dispositif de protection (5) étant configuré pour protéger un occupant dudit siège (2) vis-à-vis du système d'inclinaison (4).

7. Véhicule (1) automobile comprenant un siège (2) comprenant un dossier (21) et un ensemble d'un système d'inclinaison (4) d'un tel dossier (21) selon la revendication 6.

8. Procédé de fixation d'un dispositif de protection (5) d'un occupant d'un siège (2) de véhicule (1), notamment de véhicule (1) automobile, vis-à-vis d'un système d'inclinaison (4) d'un dossier (21) dudit siège (2), le dispositif de protection (5) étant suivant l'une des revendications de 1 à 5, ledit véhicule (1) comprenant un élément d'habillage (3), ledit système d'inclinaison (4) comprenant une gâche (41) configurée pour coulisser par rapport audit élément d'habillage (3) du véhicule (1), ladite gâche (41) comprenant un fil de gâche (411) comportant un corps principal (411A), ledit procédé comprenant :
- une étape (E1) d'insertion d'un soufflet (51) autour de ladite gâche (41) dudit système d'inclinaison (4),
- une étape (E2) d'écartement de moyens de fixation, de manière à permettre le passage dudit corps principal (411A) dudit fil de gâche (411) de la gâche (41),
- une étape (E3) de rabattement desdits moyens de fixation derrière le corps principal (411A) du fil de gâche (411) de la gâche (41), et
- une étape (E4) de clippage de moyens d'ancrage audit élément d'habillage (3) du véhicule (1).

## Patentansprüche

1. Schutzvorrichtung (5) zum Schutz eines Insassen eines Sitzes (2) eines Fahrzeugs (1), insbesondere eines Kraftfahrzeugs (1), gegen ein Neigungssystem (4) einer Rückenlehne (21) des Sitzes (2), wobei das Fahrzeug (1) ein Verkleidungsteil (3) mit einer Vielzahl von Ausnehmungen aufweist, wobei das Neigungssystem (4) einen Schließhaken (41) aufweist, der so konfiguriert ist, dass er relativ zu dem Verkleidungsteil (3) gleitet, und einen Schließdraht (411) aufweist, der einen Hauptkörper (411A) aufweist, wobei die Vorrichtung (411A) Schutzvorrichtung (5), die so konfiguriert ist, dass sie sich zwischen einer zurückgezogenen und einer ausgefahrenen Konfiguration ändert, mit:
- Balg (51), der so konfiguriert ist, dass er den Schließhaken (41) abdeckt, wobei der Balg (51) ein erstes Ende (52) und ein zweites Ende (53) aufweist,
**dadurch gekennzeichnet, dass** die Vorrichtung
- Verankerungsmittel, die zur Befestigung des Balgs (51) an dem Verkleidungselement (3) des Fahrzeugs (1) ausgebildet sind, wobei das erste Ende (52) des Balgs (51) die Verankerungsmittel vollständig integriert, wobei die Verankerungsmittel eine Vielzahl von Befestigungslaschen (521) umfassen, die so ausgebildet sind, dass sie in die Kerben des Verkleidungselements (3) eingreifen können,
- und Befestigungsmittel umfassen eine Befestigungszunge (530), die so ausgebildet ist, dass sie hinter dem Hauptkörper (411A) des Schließdrahtes (411) umklappbar ist und die Befestigung des Faltenbalgs (51) an dem Schließhaken (41) ermöglicht, wobei das zweite Ende (53) des Faltenbalgs (51) die Befestigungsmittel einstückig integriert.

2. Schutzvorrichtung (5) nach einem der vorhergehenden Ansprüche, wobei das zweite Ende (53) die Befestigungsmittel und zwei Öffnungen (531) aufweist, die so konfiguriert sind, dass sie den Durchgang des Schließblechs (41) ermöglichen, wobei der Schließblech (41) einen gebogenen Schließblechdraht (411) mit einem vorbestimmten Durchmesser aufweist, wobei die zwei Öffnungen (531) einen Durchmesser aufweisen, der größer als der vorbestimmte Durchmesser des Schließblechdrahts (411) ist.

3. Schutzvorrichtung (5) nach einem der vorhergehenden Ansprüche, bei der der Balg (51) zwischen dem ersten Ende (52) und dem zweiten Ende (53) einen abnehmenden Querschnitt aufweist.

4. Schutzvorrichtung (5) nach einem der vorhergehenden Ansprüche, hergestellt aus einem verformbaren Material, vorzugsweise einem thermoplastischen Material, das ungefülltes und unbeschichtetes Ethylen-Propylen-Dien-Monomer und Polypropylen umfasst.

5. Schutzvorrichtung (5) nach einem der vorhergehenden Ansprüche, wobei das erste Ende (52) eine Grenzfläche (520) aufweist, die von dem Balg (51) vorsteht, wobei die Grenzfläche (520) eine Dicke (E) von größer oder gleich 3 mm aufweist.

6. Anordnung eines Neigungssystems (4) einer Rückenlehne (21) eines Sitzes (2) eines Fahrzeugs (1), insbesondere eines Kraftfahrzeugs (1), und einer Schutzvorrichtung (5) nach einem der Ansprüche 1 bis 5, wobei das Fahrzeug (1) ein Verkleidungselement (3) aufweist, wobei das Neigungssystem (4) einen Schließhaken (41) aufweist, der so konfiguriert ist, dass er relativ zu dem Verkleidungselement (3) des Fahrzeugs (1) gleitet, wobei die Schutzvorrichtung (5) so konfiguriert ist, dass sie einen Insassen des Sitzes (2) vor dem Neigungssystem (4) schützt.

7. Kraftfahrzeug (1) mit einem Sitz (2), der eine Rückenlehne (21) und eine Anordnung eines Neigungssystems (4) einer solchen Rückenlehne (21) nach Anspruch 6 umfasst.

8. Verfahren zur Befestigung einer Schutzvorrichtung (5) für einen Insassen eines Sitzes (2) eines Fahrzeugs (1), insbesondere eines Kraftfahrzeugs (1), gegen ein Neigungssystem (4) einer Rückenlehne (21) der Schutzvorrichtung (5) nach einem der Ansprüche 1 bis 5, wobei das Fahrzeug (1) ein Verkleidungselement (3) umfasst, wobei das Neigungssystem (4) einen Schließhaken (41) umfasst, der so konfiguriert ist, dass er relativ zum Verkleidungselement (3) des Fahrzeugs (1) gleitet, wobei der Schließhaken (41) einen Schließdraht umfasst che (411) mit einem Hauptkörper (411A), wobei das Verfahren umfasst:
- einen Schritt (E1) zum Einsetzen eines Faltenbalgs (51) um den Schließhaken (41) des Neigungssystems (4),
- einen Schritt (E2) zum Abstandshalten von Befestigungsmitteln, um den Durchtritt des Hauptkörpers (411A) des Schließdrahtes (411) vom Schließblech (41) zu ermöglichen,
- einen Schritt (E3) zum Umlegen der Befestigungsmittel hinter dem Hauptkörper (411A) des Schließdrahtes (411) des Schließblechs (41) und
- eine Klemmstufe (E4) für Verankerungsmittel am Verkleidungselement (3) des Fahrzeugs (1).

## Claims

1. Protective device (5) for protecting an occupant of a seat (2) of a vehicle (1), in particular of a motor vehicle (1), from a tilting system (4) of a backrest (21) of said seat (2), said vehicle (1) comprising a covering element (3) comprising a plurality of notches, said tilting system (4) comprising a keeper (41) configured to slide relative to said covering element (3) and comprising a keeper wire (411) comprising a main body (411A), said protective device (5), configured to scale between a retracted configuration and a deployed configuration, including:
- a bellows (51), configured to cover said striker (41), said bellows (51) comprising a first end (52) and a second end (53),
**characterized in that** the device comprises
- anchoring means configured to allow the attachment of said bellows (51) to said covering element (3) of the vehicle (1), said first end (52) of the bellows (51) integrally integrating said anchoring means, said anchoring means comprise a plurality of fixing tabs (521) configured to fit into the notches of the covering element (3),
- and fastening means comprise a fastening tongue (530) configured to fold back behind said main body (411A) of said striker wire (411) and allow fastening of the bellows (51) to said striker (41), said second end (53) of said bellows (51) integrally integrating said fastening means.

2. A protective device (5) according to one of the preceding claims, wherein the second end (53) comprising the fixing means and two orifices (531), configured to allow the passage of the striker (41), said striker (41) comprising a bent striker wire (411) having a predetermined diameter, said two orifices (531) having a diameter greater than said predetermined diameter of said striker wire (411).

3. Protective device (5) according to one of the preceding claims, wherein the bellows (51) has a decreasing cross-section between the first end (52) and the second end (53).

4. Protective device (5) according to one of the preceding claims, made of a deformable material, preferably a thermoplastic material comprising polypropylene and uncharged and uncoated ethylene-propylene-diene monomer.

5. A protective device (5) according to one of the preceding claims, wherein the first end (52) comprises an interface surface (520) projecting from said bellows (51), said interface surface (520) has a thickness (E) of 3 mm or more.

6. Assembly of a tilting system (4) for a backrest (21) of a seat (2) of a vehicle (1), in particular of a motor vehicle (1), and of a protection device (5) according to one of Claims 1 to 5, said vehicle (1) comprising a covering element (3), said tilting system (4) comprising a keeper (41) configured to slide relative to said covering element (3) of the vehicle (1), said protection device (5) being configured to protect an occupant of said seat (2) from the tilting system (4).

7. A motor vehicle (1) comprising a seat (2) comprising a backrest (21) and an assembly of an inclination system (4) of such a backrest (21) according to claim 6.

8. Method for fixing a protective device (5) of an occupant of a seat (2) of a vehicle (1), in particular a motor vehicle (1), with respect to a tilting system (4) of a backrest (21) of said protective device (5) being according to one of claims 1 to 5, said vehicle (1) comprising a covering element (3), said tilting system (4) comprising a keeper (41) configured to slide with respect to said covering element (3) of the vehicle (1), said keeper (41) comprising a keeper wire (411) having a main body (411A), said method comprising:
- a step (E1) for inserting a bellows (51) around said striker (41) of said tilting system (4)
- a step (E2) for separating fixing means, so as to allow the passage of said main body (411A) of said striker wire (411) of the striker (41)
- a step (E3) of folding said fixing means behind the main body (411A) of the striker wire (411) of the striker (41), an
- a step (E4) for clipping anchoring means to said covering element (3) of the vehicle (1).
